# EUROPÄISCHE PATENTSCHRIFT

(11) **EP 0 869 084 B1**
(45) Veröffentlichungstag und Bekanntmachung des Hinweises auf die Patenterteilung: **11.06.2003**
(21) Anmeldenummer: 98105274.9
(22) Anmeldetag: 24.03.1998
(51) Int. Cl.: B65G 1/04, B65G 35/08

(54) **Regalanlage mit Trays für Fördergüter und Vorrichtung zum Manipulieren der Trays**
Shelving system comprising trays for conveying material and a device for handling the trays
Installation d'emmagasinage avec supports pour transporter des matériaux et dispositif pour la manipulation des supports

(30) Priorität: 03.04.1997 DE 29705875 U; 29.07.1997 DE 29713467 U
(43) Veröffentlichungstag der Anmeldung: 07.10.1998
(73) Patentinhaber: psb GmbH Materialfluss + Logistik, 66955 Pirmasens (DE)
(72) Erfinder: Stümper, Dieter, 66955 Pirmasens (DE); Kreuter, Wolfgang, 76829 Landau (DE); Gering, Michael, 66386 St. Ingberg (DE)
(74) Vertreter: Patentanwälte Möll und Bitterich

(56) Entgegenhaltungen:
- EP-A- 0 405 471
- EP-A- 0 474 514
- EP-A- 0 493 327
- DE-A- 3 205 708
- DE-C- 823 735
- FR-A- 2 547 287

## Beschreibung

Die Erfindung betrifft eine Regalanlage mit wenigstens einem Regal und einer Vielzahl von Trays zur Aufnahme von auf Förderanlagen zu transportierenden und in Regalen einzulagernden Fördergütern gemäß dem Oberbegriff des Anspruchs 1.

Aus der EP-A 0 474 514, der DE-U 91 04 529 und der DE-A 195 01 883 sind Trays, d. h. tablettartige Vorrichtungen zur Aufnahme von in Regalanlagen einzulagernden und/oder auf Förderstrecken zu transportierenden Stückgütern und/oder Lagerund Transportbehältern sowie zum Ein- und Auslagern dieser Trays in bzw. aus den Regalanlagen geeignete Manipulationsgeräte bekannt. Die Trays besitzen ein flaches Tablar, welches durch einen erhöhten Rahmen berandet ist. An den beiden Stirnseiten ist ein Stapelrand vorgesehen. Das Tablar ist durch eine auf seiner Unterseite vorgesehen Gitterverrippung versteift. Um eine Vielzahl dieser Trays zu einem Förderzug koppeln zu können, sind die Stirnseiten mit Kupplungselementen versehen.

Die in der DE-U 91 04 529 und der DE-A 195 01 883 offenbarten Kupplungselemente sind so ausgebildet, dass aufeinanderfolgende Trays in eine einander übergreifende, lösbare Verbindung gebracht werden können, wobei das mit dem übergreifenden Kopplungselement wirksame Ende eines Trays gegenüber dem mit dem untergreifenden Kopplungselement wirksamen Ende des benachbarten Trays eine angehobene Lage einnimmt.

Diese bekannten Trays haben einige Nachteile. Da mit Ausnahme des ersten Trays alle Trays einerseits nur auf dem Kopplungselement, andererseits auf der Traykante stehen, können sich die Tablare und/oder die Kopplungselemente unter dem Gewicht des Förderguts durchbiegen; beim späteren Transport liegen die Trays nicht mehr vollflächig auf den Förderbahnen auf oder die Kopplungselemente lösen sich, so dass es zu Betriebsstörungen kommt. Durch die einseitige Erhöhung der Trays reduziert sich die maximal zur Verfügung stehende Höhe in den Regalfächem.

Das in diesen Druckschriften beschriebene Manipulationsgerät ist so ausgebildet, dass es die Trays an den Kopplungselementen erfasst, um sie in die Regalfächer hineinzuschieben bzw. aus den Regalfächern herauszuziehen. Sind die Trays schwer beladen, kommt es dabei leicht zu einer weiteren Überbeanspruchung der Kopplungselemente mit der Folge, dass sie ihre Form und damit ihre Funktionssicherheit verlieren.

Die in der EP-A 0 474 514 beschriebenen Kupplungselemente sind als einfache Haken ausgebildet. Zum Koppeln und Entkoppeln müssen die Trays daher relativ zueinander angehoben bzw. abgesenkt oder seitlich verschoben werden. Dazu sind am Anfang und am Ende des Transportwegs Rampen vorgesehen, die die Relativbewegung der Trays in der Senkrechten oder in der Waagrechten bewirken.

Aus der EP-A 0 493 327 ist ein Stellplatzregal bekannt, bei dem die Regalstellplätze in vertikalen Kolonnen übereinander angeordnet sind. Die Kolonnen sind paarweise gegenüberliegend angeordnet. Zwischen zwei Kolonnen ist ein Lift vorgesehen, der die Lagerbehälter zwischen den Regalstellplätzen transportiert. Für jedes Kolonnenpaar ist ein eigener Lift mit einer nur vertikal verfahrbaren Lagerbehälteraufnahme vorgesehen. Außerdem besitzt der Lift eine Verschiebevorrichtung zum horizontalen Verschieben der Lagerbehälter. Aufgrund seiner Einfachheit lässt sich ein solches Stellplatzregal zwar kostengünstig herstellen, ist jedoch für große Lager mit automatischem Betrieb nicht geeignet.

Der vorliegenden Erfindung liegt die Aufgabe zugrunde, eine Regalanlage der eingangs genannten Art anzugeben, die für einen vollautomatischen Betrieb geeignet ist und deren Trays sicher gekoppelt und entkoppelt werden können, wobei eine unerwünschte Entkopplung ausgeschlossen ist.

Diese Aufgabe wird gelöst durch eine Regalanlage mit den Merkmalen des Anspruchs 1.

Dank der Verwendung zweier Kupplungshaken an jeder Stirnseite, wobei nach Art eines Bajonetts der eine Kupplungshaken übergreifend, der andere untergreifend ausgebildet ist, ist eine unerwünschte Entkopplung ausgeschlossen. Zum Koppeln und Entkoppeln wird der jeweils letzte Tray durch den erfindungsgemäßen Manipulator um seine Längsachse leicht gekippt ohne dass das Fördergut vom Tray fällt. Im Betrieb stehen die gekoppelten Trays flach auf ihrer Unterlage, so dass weder Höhe verloren geht noch eine unerwünschte Verformung eintritt.

An den Vertiefungen in den Seitenwänden kann der Manipulator ansetzen, ohne dass die Kupplungshaken beschädigt werden.

Gemäß einer bevorzugten Ausgestaltung der Erfindung befinden sich die versteifenden Längs- und Querrippen auf der Oberseite der Bodenplatte. Dadurch finden die Fördergüter einen besseren Halt.

Vorteilhafterweise besitzt die Unterseite der Bodenplatte einen glatten, umlaufenden Rand und eine zentrale Vertiefung. Dadurch läuft der erfindungsgemäße Tray problemlos auf allen derzeit bekannten Förderstrecken. Außerdem greift hier auch der erfindungsgemäße Manipulator an.

Um dem Manipulator einen definierten Eingriff zu ermöglichen, können an der Unterseite der Bodenplatte zusätzlich Haltenuten vorgesehen werden.

Gemäß einer Weiterbildung der Erfindung ist die Unterseite der Bodenplatte mit Zentriernuten ausgerüstet. Diese wirken mit entsprechenden Ausprägungen am Regal und/oder am Manipulationsgerät zusammen, so dass der Tray jederzeit eine definierte Position auf den entsprechenden Einrichtungen einnimmt.

Vorzugsweise sind die Trays aus thermoplastischem Kunststoff gefertigt und raumsparend übereinander stapelbar. Auch ist wenigstens ein Barcode an dem umlaufenden Rand anbringbar bzw. angebracht. Dies ermöglicht das vollautomatische Handling auf den Förderstrecken und im Regallager.

Ein wichtiges Element der vorliegenden Erfindung ist das Manipulationsgerät, welches in der Lage ist, die erfindungsgemäßen Trays durch Kippen um ihre Längsachse zu koppeln bzw. zu entkoppeln, und zwar auch wenn die Trays voll beladen sind.

Bei der vorliegenden Erfindung bilden Ziehschlitten und Saugschlitten eine Art von doppelt-teleskopischem Auszug, der trotz kurzer Baulänge lange Transporthübe ermöglicht. Der wesentliche Vorteil des erfindungsgemäßen Manipulationsgerätes liegt jedoch in der Verwendung von Vakuumsaugern, die die Trays an deren glatter Unterseite erfassen, so daß bei allen Transport- und Manipulationsbewegungen eine sichere mechanische Verbindung zwischen Manipulationsgerät und Tray besteht. Diese Vakuumverbindung ist schnell und sicher und toleriert auch größere Positionsabweichungen.

Gemäß einer vorteilhaften Weiterbildung der Erfindung umfaßt der Manipulator ferner die Merkmale des Anspruchs 6.

Dank dieser Weiterbildung lassen sich die Vakuumsauger nicht nur vorwärts und rückwärts bewegen und um die Längsachse des Ziehschlittens kippen, sondern auch in der Höhe verstellen. Dadurch ist es möglich, die in den Regalfächern stehenden Trays zu unterfahren und nach dem Hochschwenken der Vakuumsauger die mechanische Verbindung zu den Trays herzustellen. Dadurch entfällt die Notwendigkeit, zu demselben Zweck den eine wesentlich größere Masse besitzenden Hubwagen zu heben und zu senken.

Falls erforderlich, können den Saugern Haltefinger zugeordnet werden, die in die entsprechenden Haltenuten an der Unterseite der Bodenplatte eingreifen.

Gemäß einer Ausgestaltung der Erfindung umfaßt der Schlittenantrieb einen Antriebsmotor, ein von diesem angetriebenes Zahnriemenrad, einen endlosen, über Umlenkräder laufenden Zahnriemen und eine damit korrespondierende Zahnstange am Ziehschlitten, insbesondere an dessen Unterseite. Dank dieser Konstruktion kann der Ziehschlitten nach beiden Seiten ausgefahren werden, wobei die Bewegung schnell und vor allem exakt erfolgt.

Vorzugsweise sind an einem Regalbediengerät zwei Hubwagen und/oder zwei Manipulatoren angebracht. Dies ermöglicht eine wesentliche Steigerung der Leistung.

Weitere Ausgestaltungen der Erfindung sind Gegenstand der restlichen Unteransprüche.

Anhand der Zeichnung soll die Erfindung in Form von Ausführungsbeispielen näher erläutert werden. Es zeigen
- Fig. 1: eine Draufsicht auf einen Tray,
- Fig. 2: eine Seitenansicht des Trays der Fig. 1,
- Fig. 3: eine Frontansicht des Trays der Fig. 1,
- Fig. 4: ausschnittsweise eine Draufsicht auf die Unterseite des Trays der Fig. 1,
- Fig. 5: rein schematisch einen Kopplungsvorgang zweier Trays,
- Fig. 6: rein schematisch ein Lagerregal und ein in der Lagergasse positioniertes Manipulationsgerät mit einer Anzahl von Trays,
- Fig. 7: eine Draufsicht auf teils gekoppelte, teils nicht gekoppelte Trays.
- Fig. 8: rein schematisch und teilweise geschnitten einen Hubwagen mit zwei Manipulatoren zum Manipulieren der Trays nach den Fig. 1 bis 7, montiert auf einem Regalbediengerät,
- Fig. 9: rein schematisch und teilweise geschnitten-eine Vorderansicht eines der Manipulatoren der Fig. 8 in Grundstellung und
- Fig. 10: rein schematisch und teilweise geschnitten eine Frontansicht des Manipulators der Fig. 9 in Aktion.

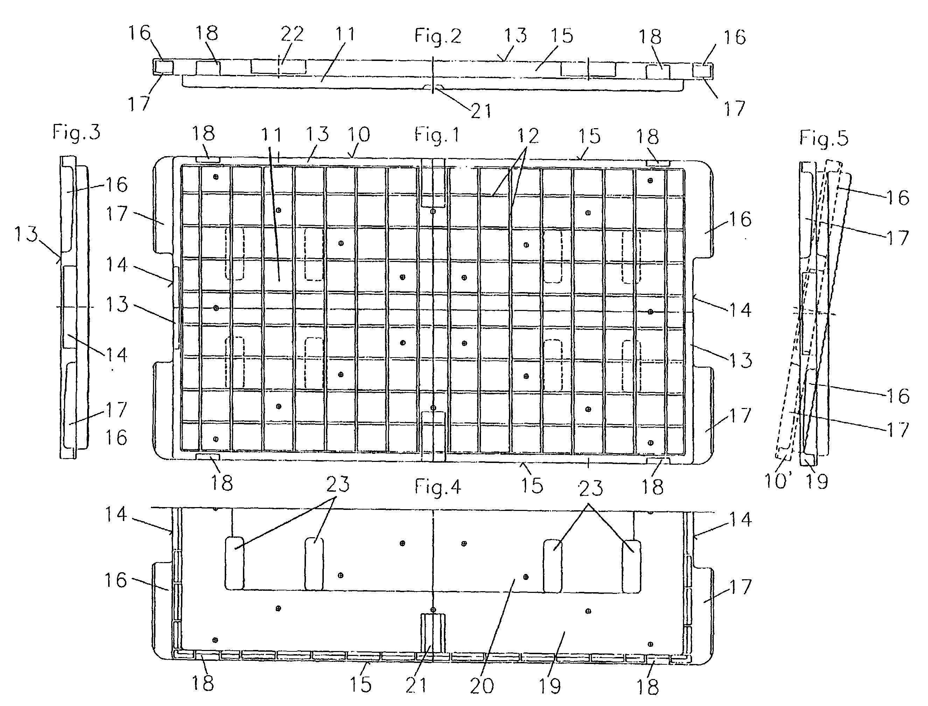

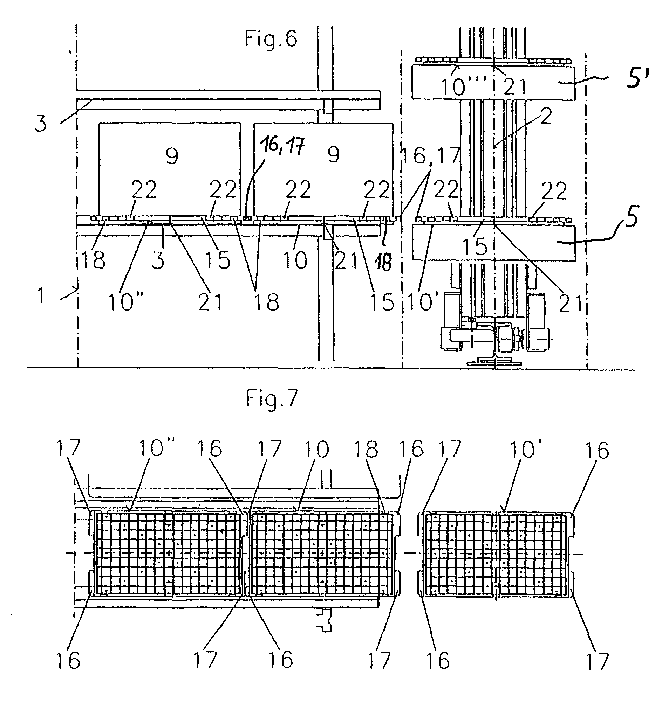

Die Fig. 1 bis 4 zeigen als Draufsicht, Seitenansicht, Frontansicht und Druntersicht einen Tray 10, hergestellt aus thermoplastischem Kunststoff, zur Aufnahme von Fördergütern 9 (Fig. 6), die auf Förderanlagen transportiert und in Regalen 1 (Fig. 6) eingelagert werden. Jeder Tray 10 besitzt eine Bodenplatte 11, die durch Längs-und Querrippen 12, angebracht auf der Oberseite der Bodenplatte 11, verstärkt ist. Um die Bodenplatte 11 herum läuft ein erhöhter Rand 13. An den Stirnseiten 14 des Trays 10 sind jeweils zwei gegenseitig beabstandete Kupplungshaken 16, 17 vorgesehen. Dabei ist jeweils der eine Kupplungshaken 16 nach unten, der andere Kupplungshaken 17 nach oben abgewinkelt.

Fig. 5 zeigt, daß zum Koppeln zweier Trays 10, 10' der auf dem Manipulationsgerät 2 stehende Tray 10' (Fig. 6) leicht um seine Längsachse gekippt wird, bis die Kupplungshaken 16, 17 einander übergreifen können. Danach wird der Tray 10' wieder zurückgeschwenkt. Die Kupplungshaken 16, 17 sind unlösbar miteinander verhakt. Die Trays stehen völlig eben auf ihrer Unterlage. Das Gewicht der Fördergüter 9 wird optimal auf die Unterlage abgetragen, ohne daß es zu unerwünschten Durchbiegungen kommen kann. Die volle Höhe des Regalfachs steht für das Fördergut 9 zur Verfügung.

Alternativ können die Trays 10, 10' auch durch seitliches Verschieben gekoppelt und entkoppelt werden.

Wie Fig. 4 zeigt, ist die Unterseite der Bodenplatte 11 mit einem breiten, glatten, umlaufenden Rand 19 und einer zentralen Vertiefung 20 versehen. Dank dieser Ausgestaltung läuft der Tray 10 völlig störungsfrei auf allen derzeit bekannten Förderanlagen.

Fig. 6 zeigt rein schematisch ein Lagerregal 1 und ein in der Regalgasse laufendes Regalbediengerät 2. Das Regal 1 ist mit Regalschienen 3 ausgerüstet, zwischen denen die Regalfächer gebildet sind. Das Regalbediengerät 2 ist mit zwei Hubwagen 5, 5' ausgerüstet, jeweils mit einem eigenen Manipulator.

In einem der Regalfächer sind zwei über ihre Kupplungshaken 16, 17 gekoppelte Trays 10, 10'' abgestellt. Die auf den Trays 10, 10'' gelagerten Fördergüter 9 füllen praktisch die ganze Höhe des Regalfachs aus. Auf dem Manipulationsgerät 2 erkennt man weitere Trays 10', 10'''. Um den Tray 10' mit dem Tray 10 koppeln zu können, muß das Manipulationsgerät 2 den Tray 10' um seine Längsachse kippen, wie dies in Fig. 5 dargestellt ist, und anschließend den Tray 10' auf den Tray 10 zubewegen, bis die Kupplungshaken 16, 17 bajonettartig miteinander koppeln.

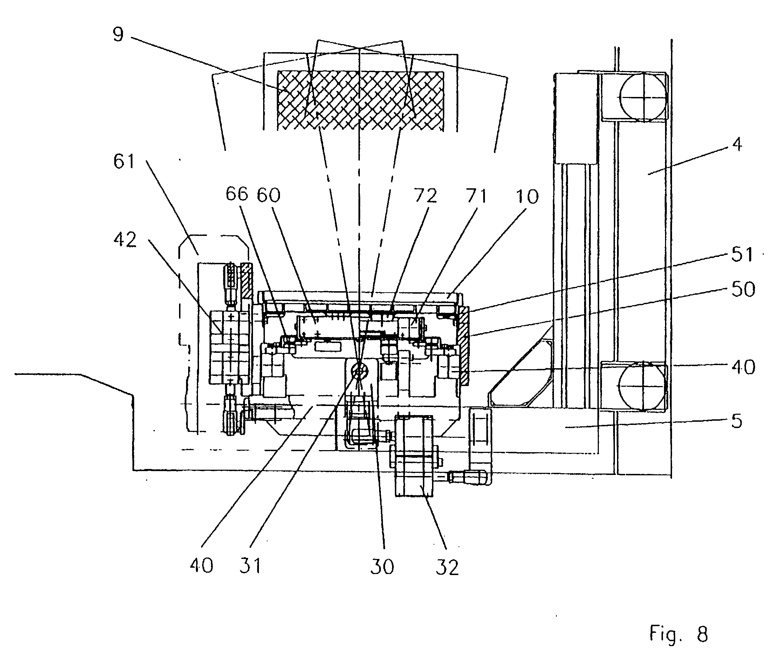

Um die gekoppelten Trays 10, 10', 10'' in das Regal 1 hineinzuschieben bzw. aus dem Regal 1 herauszuziehen, ist das Regalbediengerät 2 mit einem Manipulator (Fig. 8 - 10) ausgerüstet, der z. B. in entsprechende Vertiefungen 18 in den Seitenwänden der Trays 10, 10' eingreift. Die Seitenwände 15 sind wesentlich stabiler als die Kupplungshaken 16, 17.

In den Seitenwänden 15 der Trays 10, 10', 10'', 10''' sind Felder 22 vorgesehen, an denen ein Barcode oder ein anderes automatisches Identifizierungsmittel angebracht werden kann.

Die Unterseite der Bodenplatte 11 der Trays 10, 10', 10'', 10''' ist darüber hinaus mit Zentriernuten 21 ausgerüstet. Diese wirken mit entsprechenden Erhöhungen (nicht dargestellt) auf den Regalschienen 3 bzw. dem Lastaufnahmemittel des Regalbediengerätes 2 zusammen, so daß jeder Tray eine definierte Position erhält.

Fig. 8 als Seitenansicht zeigt rein schematisch und teilweise geschnitten zwei Vorrichtungen zum Manipulieren der Trays 10, 10', 10'', montiert auf einem Hubwagen 5 des Regalbediengerätes 2, von dem nur ein Teilstück des Mastes 4 abgebildet ist.

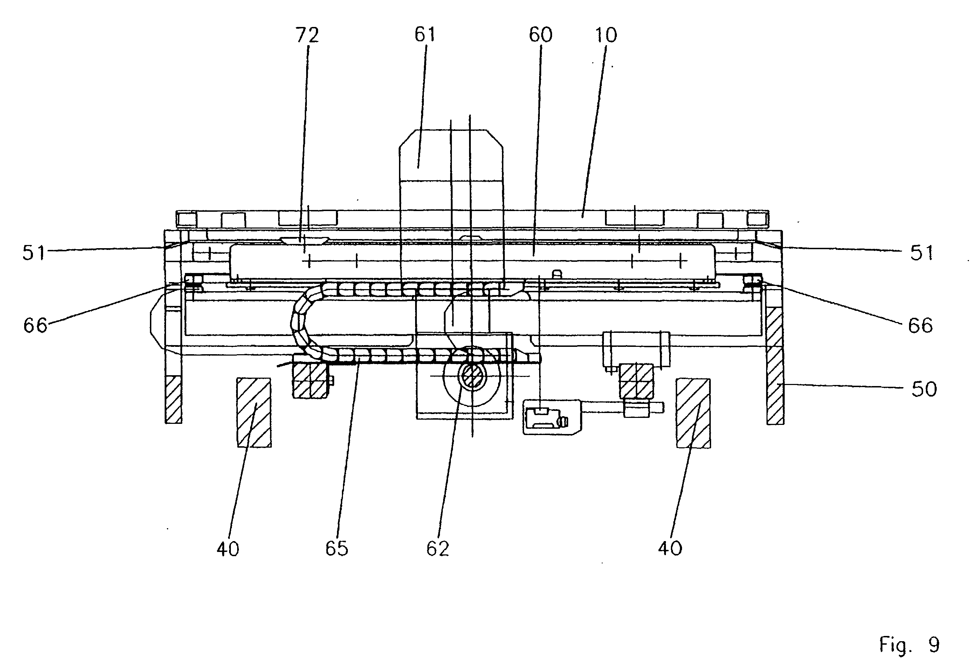

Fig. 9 zeigt eine Frontansicht eines der Manipulatoren der Fig. 8.

Auf der Plattform des Hubwagens 5 erkennt man zunächst einen Grundrahmen 30, der eine Kippachse 31 trägt, die sich in Längsrichtung der Trays 10 erstreckt. Auf der Kippachse 31 ist ein Kipprahmen 40 montiert. Dieser kann mit Hilfe eines Pneumatikzylinders 32 nach rechts und links gekippt werden, um die Kupplungshaken 16, 17 an den Stirnseiten 14 der Trays 10 zu koppeln oder zu entkoppeln.

Der Kipprahmen 40 trägt eine Hilfsachse 41 (Fig. 9), die senkrecht zur Kippachse 31 gerichtet ist. Darauf ist ein Hilfsrahmen 50 gelagert, der mittels eines Hilfsantriebs 42, ebenfalls in Form eines Pneumatikzylinders, um die Hilfsachse 41 geschwenkt werden kann.

Der Hilfsrahmen 50 trägt an beiden Längseiten je eine Stellschiene 51, auf der der Tray 10, beladen mit Fördergut 9, während des Transports von der Übergabestelle zum Lagerfach und zurück steht.

Im Hilfsrahmen 50 ist ein Ziehschlitten 60 beweglich gelagert. Die Bewegung des Ziehschlittens 60 erfolgt mit Hilfe eines endlosen Zahnriemens 63, der in eine Zahnstange 64 an der Unterseite des Ziehschlittens 60 eingreift. Der Zahnriemen 63 läuft über verschiedene Umlenk- und Spannrollen. Der Antrieb erfolgt durch einen Antriebsmotor 61 und ein angetriebenes Zahnriemenrad 62.

Führungsrollen 66 führen den Ziehschlitten 60 seitlich.

Auf dem Ziehschlitten 60 befindet sich ein Saugerwagen 70, der zwei Vakuumsauger 72 trägt, deren Saugtrichter nach oben über die Oberkante des Ziehschlittens 60 überstehen. Der Antrieb des Saugerwagens 70 erfolgt mittels Saugerantrieb 71 in Form zweier kolbenstangenloser Pneumatikzylinder.

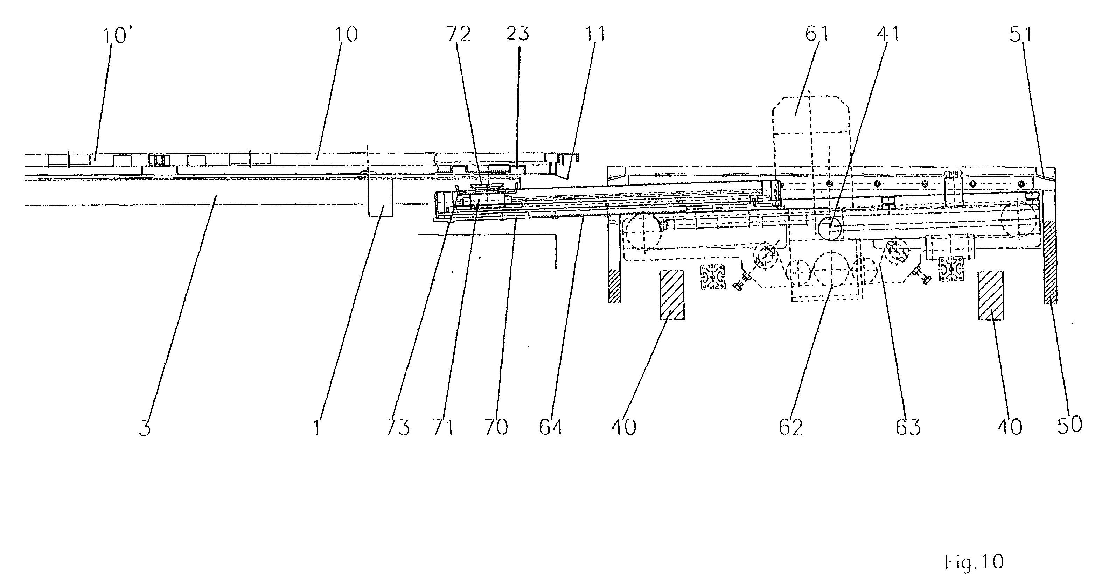

Fig. 10 zeigt den Manipulator in Aktion. Der Hilfsrahmen 50 ist um die Hilfsachse 41 nach links gekippt, der Ziehschlitten 60 ist ausgefahren, ebenso der Saugerwagen 70 mit den beiden Vakuumsaugern 72. Die Vakuumsauger 72 haben den auf den Regalschienen 3 stehenden Tray 10 unterfahren. Wird nun der Hilfsrahmen 50 um die Hilfsachse 41 zurückgeschwenkt, saugen sich die Vakuumsauger 72 an der flachen Bodenplatte 11 des Trays 10 an, wodurch eine feste mechanische Verbindung entsteht, so daß die gekoppelten Trays 10, 10' auch im beladenen Zustand gezogen bzw. geschoben und der Tray 10 zum Entkoppeln auch gekippt werden kann.

Den Saugern 72 sind zusätzliche Haltefinger-73 zugeordnet, die in Haltenuten 23 (Fig. 4) an der Unterseite der Bodenplatte 11 des Trays 10, 10'eingreifen, so daß auch eine formschlüssige Verbindung entsteht.

## Patentansprüche

1. Regalanlage, umfassend
- wenigstens ein Regal (1),
- eine Vielzahl von Trays (10, 10', 10", 10"') zur Aufnahme von zu transportierenden und In das Regal (1) einzulagernden Fördergütern (9),
- und ein Regalbediengerät (2), auf Schienen zwischen den Regalen (1) laufend, mit
- einem Mast (4),
- wenigstens einem Hubwagen (5, 5') am Mast (4)
- und einem Manipulator (30, 40, 50, 60, 70) auf dem Hubwagen (5, 5') zum Manipulieren der Trays (10, 10', 10", 10"'),
- die Trays (10, 10', 10", 10''') besitzen
- eine Bodenplatte (11),
- verstärkt durch Längs- und Querrippen (12),
- einen um die Bodenplatte (11) umlaufenden erhöhten Rand (13)
- und winkelförmige Kupplungshaken (16, 17) an den Stirnseiten, **gekennzeichnet durch** die Merkmale:
- an jeder Stirnseite (14) sind zwei Kupplungshaken (16, 17) vorgesehen,
- jeweils der eine Kupplungshaken (16) ist nach unten, der andere Kupplungshaken (17) nach oben abgewinkelt,
- in den Seitenwänden (15) sind benachbart zu den Stirnwänden (14) Vertiefungen (18) für einen Greifer des Manipulationsgerätes (2) vorgesehen,
- der Manipulator (30, 40, 50, 60, 70) umfasst
- einen Grundrahmen (30),
- daran eine parallel zur Schieberichtung der Trays (10) orientierte Kippachse (31),
- einen Kipprahmen (40) an der Kippachse (31),
- einen Kippantrieb (32) zwischen Grundrahmen (30) und Kipprahmen (40),
- einen Ziehschlitten (60) auf dem Kipprahmen (40),
- einen Schlittenantrieb (61, 62, 63, 64), der den Ziehschlitten (60) nach beiden Seiten ausfährt,
- einen Saugerwagen (70) auf dem Ziehschlitten (60),
- einen Saugerantrieb (71) zwischen Ziehschlitten (60) und Saugerwagen (70)
- und Vakuumsauger (72) auf dem Saugerwagen (70).

2. Regalanlage nach Anspruch 1, **gekennzeichnet durch** das Merkmal:
- die Längs- und Querrippen (12) befinden sich auf der Oberseite der Bodenplatte (11).

3. Regalanlage nach Anspruch 1 oder 2, **gekennzeichnet durch** die Merkmale:
- die Unterseite der Bodenplatte (11) besitzt
- einen glatten, umlaufenden Rand (19),
- eine zentrale Vertiefung (20) und
- ist gegebenenfalls mit Zentriernuten (21) und/oder mit Haltenuten (23) ausgerüstet.

4. Regalanlage nach Anspruch 1, 2 oder 3, **gekennzeichnet durch** das Merkmal:
- die Unterseite der Bodenplatte (11) besitzt Zentriernuten (21).

5. Regalanlage nach einem der Ansprüche 1 bis 4, **gekennzeichnet durch** das Merkmal:
- die Trays (10, 10', 10'', 10''') sind raumsparend stapelbar.

6. Regalanlage nach einem der Ansprüche 1 bis 5, **gekennzeichnet durch** die Merkmale:
- der Manipulator umfasst ferner
- eine Hilfsachse (41) am Kipprahmen (40), die senkrecht zur Kippachse (31) gerichtet ist,
- einen Hilfsrahmen (50) an der Hilfsachse (41),
- einen Hilfsantrieb (42) zwischen Kipprahmen (40) und Hilfsrahmen (50),
- der Ziehschlitten (60) läuft auf dem Hilfsrahmen (50).

7. Regalanlage nach Anspruch 6, **gekennzeichnet durch** die Merkmale:
- der Schlittenantrieb umfasst
- einen Antriebsmotor (61),
- ein angetriebenes Zahnriemenrad (62),
- einen endlosen Zahnriemen (63),
- einen Zahnstange (64) am Ziehschlitten (60).

8. Regalanlage nach Anspruch 6 oder 7, **gekennzeichnet durch** das Merkmal:
- die Sauger (72) kooperieren mit dem flachen Boden (11) der Trays (10).

9. Regalanlage nach einem der Ansprüche 6 bis 8, **gekennzeichnet durch** das Merkmal:
- die Sauger (72) sind den Haltefinger (73) zugeordnet.

10. Regalanlage nach einem der Ansprüche 6 bis 9, **gekennzeichnet durch** das Merkmal:
- zwei kolbenstangenlose Pneumatikzylinder bilden den Saugerantrieb (71).

11. Regalanlage nach einem der Ansprüche 6 bis 10, **gekennzeichnet durch** das Merkmal:
- die Trays (10) stehen auf Stellschienen (51) neben dem Ziehschlitten (60).

12. Regalanlage nach einem der Ansprüche 6 bis 11, **gekennzeichnet durch** das Merkmal:
- Führungsrollen (66) führen den Ziehschlitten (60) seitlich.

13. Regalanlage nach einem der Ansprüche 6 bis 12, **gekennzeichnet durch** das Merkmal:
- an einem Regalbediengerät (2) sind zwei Hubwagen (5, 5') und/oder zwei Manipulatoren (30, 40, 50, 60, 70) angebracht.

## Claims

1. A shelving system comprising
- at least one shelf (1),
- a plurality of trays (10,10',10'',10''') to receive goods (9) to be conveyed and to be stored on the shelf (1)
- and a shelf-handling device (2) running on rails between the shelves (1), having
- a mast (4),
- at least one lift truck (5,5') on the mast (4)
- and a manipulator (30,40,50,60,70) on the lift truck (5,5') for manipulating the trays (10,10',10'',10'''),
- the trays (10,10',10'',10''') have
- a base plate (11),
- reinforced by longitudinal and transverse ribs (12),
- a raised edge (13) running around the base plate (11)
- and angular coupling hooks (16,17) on the end faces, **characterised by** the features:
- at each end face (14) two coupling hooks (16,17) are provided,
- each coupling hook (16) is bent downwards and the other coupling hook (17) is bent upwards,
- recesses (18) for the gripper of the manipulating device (2) are provided in the side walls (15) adjacent the end walls (14),
- the manipulator (30,40,50,60,70) comprises
- a base frame (30),
- a tilt axis (31) thereon directed parallel to the displacement direction of the tray (10),
- a tilting frame (40) on the tilt axis (31),
- a tilting drive (32) between the base frame (30) and the tilting frame (40),
- a draw slide (60) on the tilting frame (40),
- a slide drive (61,62,63,64) which extends the draw slide (60) out on both sides,
- a suction carriage (70) on the draw slide (60),
- a suction drive (71) between the draw slide (60) and the suction carriage (70)
- and a vacuum suction means (72) on the suction carriage (70).

2. A shelving system according to Claim 1, **characterised by** the feature:
- the longitudinal and transverse ribs (12) are situated on the upper side of the base plate (11).

3. A shelving system according to Claim 1 or 2, **characterised by** the features:
- the underside of the base plate (11) has
- a smooth peripheral edge (19),
- a central recess (20) and
- is optionally provided with centering grooves (21) and/or with retaining grooves (23).

4. A shelving system according to Claim 1, 2 or 3, **characterised by** the feature:
- the underside of the base plate (11) has centering grooves (21).

5. A shelving system according to any one of Claims 1 to 4, **characterised by** the feature:
- the trays (10,10',10'',10''') can be stacked in a space-saving manner.

6. A shelving system according to any one of Claims 1 to 5, **characterised by** the features:
- the manipulator further comprises
- an auxiliary axis (41) on the tilting frame (40), which is directed perpendicularly to the tilt axis (31),
- an auxiliary frame (50) on the auxiliary axis (41),
- an auxiliary drive (42) between the tilting frame (40) and the auxiliary frame (50),
- the draw slide (60) runs on the auxiliary frame (50).

7. A shelving system according to Claim 6, **characterised by** the features:
- the slide drive comprises
- a drive motor (61),
- a driven toothed belt pulley (62),
- an endless toothed belt (63),
- a rack (64) on the draw slide (60).

8. A shelving system according to Claim 6 or 7, **characterised by** the feature:
- the suction means (72) co-operate with the flat bottom (11) of the trays (10).

9. A shelving system according to any one of Claims 6 to 8, **characterised by** the feature:
- the suction means (72) are associated with retaining fingers (73).

10. A shelving system according to any one of Claims 6 to 9, **characterised by** the feature:
- two pneumatic cylinders without a piston rod form the suction drive (71).

11. A shelving system according to any one of Claims 6 to 10, **characterised by** the feature:
- the trays (10) are disposed on slide rails (51) close to the draw slide (60).

12. A shelving system according to any one of Claims 6 to 11, **characterised by** the feature:
- guide rollers (66) guide the draw slide (60) laterally.

13. A shelving system according to any one of Claims 6 to 12, **characterised by** the feature:
- two lift trucks (5,5') and/or two manipulators (30,40, 50,60,70) are mounted on one shelf-handling device (2).

## Revendications

1. Installation d'emmagasinage comprenant
- au moins un rayonnage (1)
- une pluralité de supports (10, 10', 10'', 10''') pour recevoir des matériaux (9) à transporter et à stocker dans le rayonnage (1),
- et un transstockeur (2), passant sur des rails entre les rayonnages (1), avec
- un mât (4),
- au moins un chariot élévateur (5, 5') sur le mât (4),
- et un manipulateur (30, 40, 50, 60, 70) sur le chariot élévateur (5, 5') pour manipuler les supports (10, 10', 10'', 10'''),
- les supports (10, 10', 10'', 10''') possédant
- une plaque de fond (11),
- renforcée par des nervures longitudinales et transversales (12),
- un bord (13) surélevé passant autour de la plaque de fond (11),
- et des crochets de traction angulaires (16, 17) sur les faces frontales, **caractérisée en ce que** :
- sur chaque face frontale (14) sont prévus deux crochets de traction (16, 17),
- l'un des crochets de traction (16) est plié vers le bas, l'autre (17) vers le haut,
- sur les parois latérales (15) sont prévus, à proximité des parois frontales (14), des creux (18) pour une pince du transstockeur (2),
- le manipulateur (30, 40, 50, 60, 70) comprend :
- un châssis de base (30)
- avec un axe de bascule (31) orienté parallèlement à la direction dans laquelle coulissent les supports (10),
- un cadre de bascule (40) sur l'axe de bascule (31),
- un mécanisme de bascule (32) entre le châssis de base (30) et le cadre de bascule (40),
- un traîneau d'extraction (60) sur le cadre de bascule (40),
- un entraînement de traîneau (61, 62, 63, 64), qui sort le traîneau d'extraction vers les deux côtés,
- un chariot aspirateur (70) sur le traîneau d'extraction (60),
- un entraînement d'aspiration (71) entre le traîneau d'extraction (60) et le chariot aspirateur (70)
- un aspirateur à vide (72) sur le chariot aspirateur (70).

2. Installation d'emmagasinage selon la revendication 1, **caractérisée en ce que** :
- les nervures longitudinales et transversales (12) se trouvent sur la face supérieure de la plaque de fond (11).

3. Installation d'emmagasinage selon la revendication 1 ou 2, **caractérisée en ce que** :
- la face inférieure de la plaque de fond (11) possède
- un bord (19) lisse tout autour,
- un creux central (20) et
- est au besoin équipée de rainures de centrage (21) et/ou de rainures de retenue (23).

4. Installation d'emmagasinage selon la revendication 1, 2 ou 3, **caractérisée en ce que** :
- la face inférieure de la plaque de fond (11) possède des rainures de centrage (21).

5. Installation d'emmagasinage selon l'une des revendications 1 à 4, **caractérisée en ce que** :
- les supports (10, 10', 10'', 10''') sont empilables pour économiser de la place.

6. Installation d'emmagasinage selon l'une des revendications 1 à 5, **caractérisée en ce que** :
- le manipulateur comprend en outre
- un axe secondaire (41) sur le cadre de bascule (40), dirigé perpendiculairement à l'axe de bascule (31),
- un cadre secondaire (50) sur l'axe secondaire (41),
- un mécanisme secondaire (42) entre le cadre de bascule (40) et le cadre secondaire (50),
- le traîneau d'extraction (60) passant sur le cadre secondaire (50).

7. Installation d'emmagasinage selon la revendication 6, **caractérisée en ce que** :
- l'entraînement du traîneau comprend
- un moteur (61),
- une roue à courroie dentée entraînée (62),
- une courroie dentée sans fin (63),
- une crémaillère (64) sur le traîneau d'extraction (60).

8. Installation d'emmagasinage selon la revendication 6 ou 7, **caractérisée en ce que** :
- les aspirateurs (72) coopèrent avec le fond plat (11) des supports (10).

9. Installation d'emmagasinage selon l'une des revendications 6 à 8, **caractérisée en ce que** :
- les aspirateurs (72) sont affectés aux doigts de retenue (73).

10. Installation d'emmagasinage selon l'une des revendications 6 à 9, **caractérisée en ce que** :
- deux cylindres pneumatiques sans tige de piston forment l'entraînement d'aspiration (71).

11. Installation d'emmagasinage selon l'une des revendications 6 à 10, **caractérisée en ce que** :
- les supports (10) tiennent sur des glissières (51) près du traîneau d'extraction (60).

12. Installation d'emmagasinage selon l'une des revendications 6 à 11, **caractérisée en ce que** :
- des galets de guidage (66) guident le traîneau d'extraction (60) sur le côté.

13. Installation d'emmagasinage selon l'une des revendications 6 à 12, **caractérisée en ce que** :
- sur un transstockeur (2) sont montés deux chariots élévateurs (5, 5') et/ou deux manipulateurs (30, 40, 50, 60, 70).
